# EUROPEAN PATENT SPECIFICATION

(11) **EP 2 941 584 B1**
(45) Date of publication and mention of the grant of the patent: **13.03.2019**
(21) Application number: 14700519.3
(22) Date of filing: 03.01.2014
(51) Int. Cl.: F16L 25/06, F16L 25/12, F16L 27/113

(54) **GRIPPING MEANS**
GREIFMITTELN
MOYENS DE PRÉHENSION

(30) Priority: 04.01.2013 GB 201300113
(43) Date of publication of application: 11.11.2015
(73) Proprietor: Nova Siria S.r.l., Roletto (TO) (IT)
(72) Inventor: PATRIARCA, Sergio, I-10044 Turin (IT)
(74) Representative: Wood, Graham
(86) International application number: PCT/GB2014/050012
(87) International publication number: WO 2014/106749

(56) References cited:
- EP-A2- 2 090 815
- JP-A- S6 174 990
- US-A- 4 799 714
- US-A- 4 848 808
- US-A1- 2006 244 260
- US-B1- 6 173 993
- US-B1- 7 997 628

## Description

The invention to which this application relates is to a gripping means and to a fitting including such gripping means for use in the joining of at least one end of a pipeline, and the portion adjacent to the end, to another pipeline, or to a pipeline component. The use of fittings of this type, is well known and the invention particularly relates to the ability to maintain the said end of the pipeline in the required position within the fitting over time and following installation so as to maintain the integrity of the fitting and pipeline connection.

The provision of pipelines for services and/or supplies such as fluids such water, oil and/or gas is well known and provide an important part of the supply infrastructure. At intervals along the said pipeline, there is a need to join together sections of pipeline so as to form the overall pipeline and/or to provide certain components, such as valves, to allow the control of the fluid along the pipeline. At the locations of the join, the interface between an end of the pipeline and another pipeline end or component, are required to be joined together in a fluid tight manner and also in a mechanically sound manner so as to be able to maintain the said pipeline end in the required position in the fitting over time and hence maintain the integrity of the pipeline. Furthermore, the pipeline end, and the fitting therefore, is required to withstand both internal pressure from the fluid passing along the pipeline which may attempt to force one or both pipelines out of the fitting, such as, for example, the force of pressurised fluid in a particular direction through the pipeline, and also to withstand external forces which may be applied to the pipeline and/or fitting, such as, for example, the settlement of soil around the pipeline if the same is underground and which settlement may cause relative movement between the pipeline and the fitting.

Conventionally, with regard to withstanding the movement forces, and the effect of the same on removing the pipeline from the pipe fitting, this is known to be a particular problem where there is a bend in the pipeline downstream of the fitting, although the use of the invention is not limited to only this part of the pipeline. It is known to form a concrete block externally of the pipeline bend and which block serves to mechanically locate the pipeline bend so as to try and prevent the bend portion, and hence the pipeline end, from moving with respect to the fitting and hence resist both external forces which may act on the same and also resist the force of the pressurised fluid. However this solution is expensive in terms of the pipeline installation as it requires a significantly greater amount of the material adjacent to the pipeline fitting to be excavated, requires additional material in the form of concrete to be input to the excavated area and also requires the excavated material to be deposited elsewhere.

It is also known to provide pipeline gripping means as part of the pipeline fitting, with typically a number of gripping means spaced around the inner circumference of the pipe fitting body and the gripping means can be selectively moved inwardly such that teeth which are provided on the inner face of the gripping means, engage on the external surface of the wall of a portion of the pipeline which lies within the pipe fitting, with a view to gripping the pipeline and restricting the possibility of movement of the pipeline with respect of the fitting. However, as the gripping means teeth are provided as a unitary component and in a fixed location with respect to a bolt which passes through the pipe fitting body and which is typically used to linearly move the gripping means towards and from the external face of the pipeline, this means that once the gripping means have been set in position in contact with the pipeline wall at the time of installation, the position of the same are fixed. Typically, once this has been done, the pipeline, if provided underground, is surrounded by soil and other material such that the position of the gripping means with respect to the pipeline can no longer be adjusted as the actuating means bolts are no longer accessible and these are the only way of causing movement of the gripping means teeth. In practice, it is found that while the gripping means may have the desired effect at the time of installation by resisting movement of the pipeline away from the pipe fitting, the influence of the fluid passing along the pipeline and/or the settlement of soil and/or other material with respect to the pipeline and pipe fitting over time after installation exert movement forces on the pipeline and/or pipe fitting which often causes relative movement between the pipeline and the pipe fitting and/or movement of the pipeline with regard to the gripping means of the pipe fitting. This, in turn, means that the gripping effect exerted by the conventional gripping means on the pipeline with regard to the pipe fitting is reduced which in itself can cause leakage of the fluid from the pipeline at the fitting and/or can make the pipeline more susceptible to the movement forces applied thereto by the pressurised fluid within the pipeline so that further movement of the pipeline away from the pipe fitting is possible and which can cause further leakage and/or catastrophic failure of the pipe fitting joint.

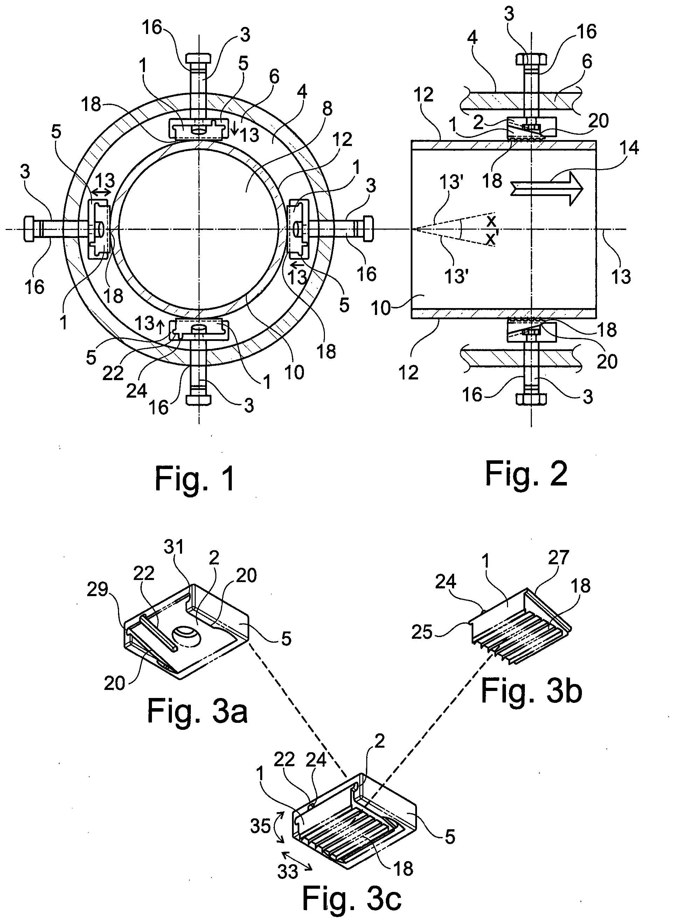

Documents US 6173993B1 or US 4848808 disclose a pipe fitting including a gripping member. Document EP 2090815A2 discloses a pipe fitting including a gripping member 8 and a guide means 5, see for instance figures 3, 5 and 6. The aim of the present invention is therefore to provide a gripping means and a pipe fitting including such gripping means for use in the joining of at least one end of a pipeline either to another end of a pipeline or to a pipeline component and to provide the pipe fitting in a manner which allows improved resistance to movement forces which may be applied to the pipeline and/or fitting once installed so as to maintain the integrity of the joint between the fitting and pipeline over time.

In a first aspect of the invention, there is provided a gripping means according to the technical features of claim 1. In one embodiment, the gripping member is movable with respect to the guide means once the pipe fitting has been installed. Furthermore as the gripping member and guide means body are provided as a non unitary assembly and are located within the pipe fitting so the subsequent movement between the gripping member and the guide means body can be achieved even when the pipe fitting and pipeline are buried in soil and the actuating means are no longer accessible externally of the pipe fitting.

Typically the movement which can be achieved is to take into account relative angular and/or linear movement between the pipeline and the pipe fitting. In one embodiment the linear movement is with respect to forces acting to move the pipeline out of the fitting. In one embodiment the angular movement is a change in the angular position of the longitudinal axis of the pipeline with respect to the said longitudinal axis position at the time when the pipeline is initially located in the fitting.

Typically the movement which is possible is with a predefined range which is determined by the dimensions of the guide means and location means of the gripping member located therewith.

Typically, the gripping member is movable with respect to the guide means as a result of the relative movement between the pipeline and the pipe fitting and the movement is such as to maintain or increase the gripping effect exerted on the external wall of the pipeline by the gripping member and hence maintain the integrity of the fitting.

In one embodiment the gripping member includes teeth which contact with the external wall of the pipeline. In another embodiment the gripping member face which contacts the external pipeline wall is relatively smooth.

In one embodiment, the said gripping member is wedge shaped and the movement of the gripping member is restrained such that the gripping member is movable along the guide means within a predetermined range.

Typically the guide means are provided in a body portion of the gripping means.

Typically the guide means are in the form of guide tracks which decrease in depth in a direction in which the gripping member is movable. Typically, the depth of the guide tracks decreases in the same direction as the direction of movement which is to be restricted so as to ensure that the gripping effect on the pipeline is maintained such that movement in said direction results in the gripping effect of the gripping member on the pipeline wall to be at least maintained with substantially the same force.

In one embodiment a plurality of gripping means are provided as a set for engagement of the pipeline and are provided at spaced locations in the pipe fitting such that the gripping members thereof contact with spaced locations of the pipeline wall. Typically the spacings are substantially equal around the pipe fitting and hence contact the pipeline wall at substantially equal spaced intervals.

In one embodiment the pipe fitting includes two sets of gripping means, a first set for engagement with a first pipeline end and a second set for engagement with a second pipeline end or pipeline component so as to retain the same in position in a joined sealtight manner with the pipe fitting.

In one embodiment, in a set of gripping means at least one of the gripping means is oriented in a reverse manner to the other gripping means such that the gripping member and guide means act to take into account movement of the pipeline in the opposing direction to other gripping means. Typically, this is provided to resist the possible effects of negative fluid pressure acting on the pipeline to move the same with respect to the pipe fitting.

In one embodiment, the guide means include male and female engagement means respectively provided on the gripping member and guide means so as to define the range of movement between the member and the guide means and thereby provide linear guiding of movement of the gripping member with respect to the guide means. In one embodiment, alternatively, or in addition, the said gripping member is moveable with respect to the guide means to and away from the pipeline, said degree of movement being limited by the guide means.

In one embodiment, the said angular movement of the pipeline with regard to the original location of its longitudinal axis is limited by the gripping means to be within the range of 0-5° and said angular range of change can be accommodated by the gripping means whilst maintaining the gripping effect on the pipeline. Typically, this change in position of the pipeline with respect to the fitting allows the gripping means to take into account relative movement between the pipeline and pipe fitting over time whilst maintaining the gripping effect on the pipeline.

Typically, the plurality of said gripping means in a set are provided as part of the pipe fitting and typically are spaced around the periphery of the cavity which is provided to receive the pipeline end therein.

Typically, the position of each of the members with regard to the fitting is independently adjustable in a linear direction towards and away from the pipe fitting internal wall at the time of installation by the installer using the actuation means for each of the respective gripping means so as to allow, at the time of installation, the gripping member of each gripping means to be moved into contact with, and provide a gripping effect on, the external wall of the pipeline which located in the pipe fitting. The provision of the ability in accordance with the invention for subsequent movement in a limited and guided manner of the gripping member of the gripping means allows subsequent relative movement between the pipeline and the pipe fitting to occur in a controlled manner and without affecting the integrity of the join between the pipeline and the fitting.

In one embodiment, the pipe fitting body is provided at a first end with a cavity for receipt of a first pipeline end and at the opposing end with a cavity for the receipt of a second pipeline end and first and second sets of gripping means in accordance with the invention are located towards each end of the fitting respectively and are provided to be moveable into the cavity to contact with the respective pipelines.

In another embodiment, the pipe fitting body is provided with a cavity for receipt of a pipeline end at one end, and, at the opposing end, means for engagement with a pipeline component, such as a valve, and in this case, the gripping means are provided only at one end of the fitting.

Typically the pipe fitting includes sealing means, such as one or a number of annular sealing members or o-rings which are located on the internal face of the pipe fitting body and engage with the pipeline external face and or pipeline end to provide a substantially fluid tight seal at the pipe fitting.

In one embodiment the pipe fitting is provided to be located on the pipeline in a predetermined orientation so as to be effective to act against specific forces which may act against the pipeline at different locations. In one embodiment the range of movement of the gripping members after installation and/or other parameters of the gripping members and/or guide means therefore may be altered between respective gripping means with regard to their location on the pipeline on which the fitting is to be used.

Typically the gripping means acting on the pipeline includes non-unitary assembly comprising the gripping member and a body in which the guide means for the gripping member are formed.

The invention also provided a pipeline formed from at least two pipeline portions joined together using a pipe fitting as hereindefined.

Typically the movement is a sliding, linear movement and/or angular movement.

In a further aspect of the invention, there is provided a method of joining an end of a pipeline to another end of a pipeline or a pipeline component according to the method steps of claim 12.

In one embodiment the same steps are repeated to locate a second pipeline in a second cavity of the pipeline fitting so as to allow the two pipe line ends to be joined in a fluid tight manner by the pipe fitting. In one embodiment the said first and second pipelines are joined by the pipe fitting along a common longitudinal axis.

Typically the method includes the steps of contacting gripping members of a plurality of gripping means with each pipeline at spaced intervals.

Typically the relative movement is in a linear and/or angular direction and is within a predefined range.

Specific embodiments of the invention are now described with reference to the accompanying drawings; wherein
Figure 1 illustrates an end elevation of a pipe fitting in accordance with one embodiment of the invention with a pipeline portion located in relation thereto;
Figure 2 illustrates a cross sectional elevation of the pipe fitting of Figure 1 in accordance with the invention;
Figure 3 illustrates in greater detail a gripping member and guide means in accordance with the invention; and
Figures 4a and b respectively illustrate part of a pipeline formed using the pipe fitting of the invention in one embodiment and a pipeline component joined to a pipeline using the pipe fitting of the invention in a second embodiment.

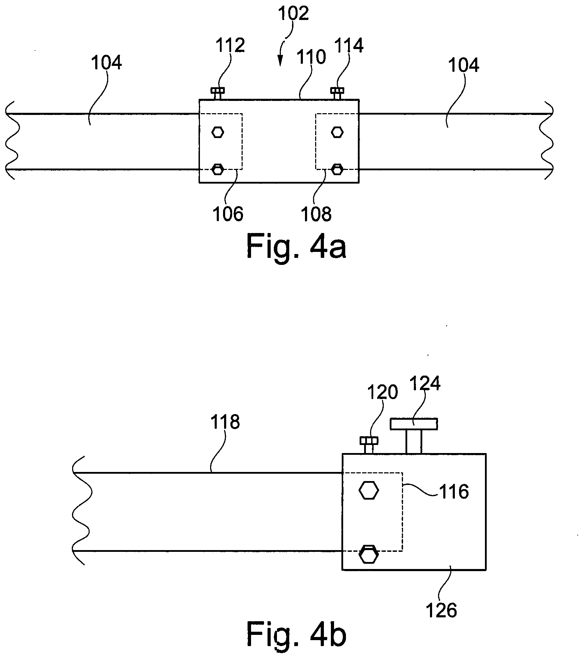

Referring firstly to Figure 4a there is shown part of a pipeline 102 which can be of a type to allow a fluid, such as water, oil, gas or the like to pass therealong. The pipeline is formed from a series of pipeline lengths 104, parts of two of which are shown. The respective ends 106,108 are joined together in a sealed manner by a pipe fitting 110 which is shown in a schematic manner for illustration. The respective pipeline ends 106,108 and portions depending therefrom, are received in cavities at opposing ends of the pipe fitting body as shown in broken lines. The pipe fitting also includes first and second sets 112, 114 of gripping means and which are provided to be operable to retain the pipelines in a fluid tight position in the pipe fitting following installation of the same.

Figure 4b shows another form of the pipe fitting 126 in accordance with the invention in which in this case the end 116 of a pipeline 118 is retained in position within the pipe fitting body via a set of the gripping means 120. The pipe fitting also includes connection means 124 for connection to a pipeline component such as a valve (not shown).

The use of the pipe fitting and gripping means in accordance with the invention will now be described in more detail with reference to Figures 1 and 2 in which there is illustrated a pipe fitting 4 in accordance with the embodiment shown in Figure 4a. The pipe fitting 4 includes a body 6 with a cavity 8 in which is located a pipeline end and portion depending therefrom 10 with an external wall 12. The possible movement forces exerted on the pipeline 10 with respect to the pipe fitting when in use is illustrated in Figure 2 by arrow 14 and it should also be appreciated that the movement force may not act in parallel with and along the longitudinal axis 13 such that the movement force may also cause the angular movement of the pipeline with respect to the fitting such that the angle of longitudinal axis 13' of the pipeline with regard to the fitting may alter by an angle "x" or "x' "as illustrated in Figure 2.

At the time of installation, in order to retain the pipeline in position with respect to the pipe fitting, the pipe fitting includes a set of gripping means 16 located at spaced intervals, as shown in Figure 1, around the annular path of the pipe fitting body 6.

Each of the gripping means 16 includes an actuating means, in this case in the form of a bolt 3 which is threadedly located with an aperture in the pipe fitting body 6 and which allows a gripping member 1 on which the free end of the bolt acts to be moved into contact with the external face 12 of the pipeline 10 at the time of installation in the direction of arrow 13 such that, in this embodiment, teeth 18 on the contact face of each of the gripping members 1 contact with the external face of the pipeline.

The gripping member 1 is in turn located with guide means 2 formed in the gripping means body 5 to form a non unitary assembly and the assembly is moved under the influence of the bolt 3 in direction of arrow 13 via location of the body 5 with the gripping member 1 and guide means, into position with the gripping member teeth 18 into contact with the face 12 of the pipeline. The gripping member 1 and guide means 2 are shown in more detail in Figures 3a-c in which in Figure 3a the gripping means body 5 is shown, in Figure 3b the gripping member 1 is shown and in Figure 3c the gripping member 1 is shown in position in the gripping means body 5. It will be seen how the gripping member 1 is provided to be wedge shaped and be moveable with respect to the sloping guide means walls 20 along a predetermined distance. The distance is defined by the length of the guide means slot 22 which receives a pin 24 formed on the face of the gripping member 1 which opposes that on which the teeth 18 are formed. The sliding movement is achieved by the engagement of rails 25,27, in this case provided on the gripping member 1 which engage with respective guide means portions, 29, 31 on the guide means body. In addition to this limited range of linear movement, the gripping member 1 may also be movable with respect to the guide means 2 in an angular or perpendicular manner by providing a level of tolerance between the dimensions of the sizes of the guide means slot 22 and portions 29,31 and the gripping member pin 24 and rails 25,27 and possibly any other relevant dimensions so as to allow angular movement between the gripping member and guide means body within a predefined range.

The provision of the gripping means in a non-unitary manner in that the same comprise a gripping member moveable with respect to the guide means body means that the limited movement between the gripping member 1 and the guide means body 5 following installation of the pipe fitting in the direction of arrows 33,35 as illustrated in Figure 3c allows relative movement between the pipeline and the fitting to be possible, after installation, to be taken into account and still ensure that the integrity of the fitting with the pipeline is maintained as the gripping effect of the gripping means on the pipeline is maintained as the gripping members teeth still engage with the surface 12 of the pipeline. Thus, if the pipeline portion is acted on by internal and/or external forces to be moved the movement of the pipeline tends to drag the gripping members 1 with respect to the guide means body, due to the grip exerted by the contact face teeth 18 on the external wall 12 of the pipeline. This causes the gripping members 1 to slide along the inclined plane formed by the sloping guide means body walls 20 and so act as a wedge between the guide means body and the external face 12 of the pipeline 10. The greater the movement force applied to the pipeline then the greater the wedge action is, thus pushing the gripping members onto the pipe wall 12. Furthermore, if the relative movement between the pipeline is not parallel with the original position of the longitudinal axis 13 of the pipeline, the ability for movement of the respective gripping members and their respective guide means ensures that an angular change of the pipeline with respect to the fitting, within a predetermined range of change will not affect the integrity of the pipeline joint created via the fitting.

## Claims

1. A gripping means (16, 112, 114, 120) for use with a pipe fitting (4), said gripping means (16, 112, 114, 120) comprising a non-unitary assembly which comprises a gripping member (1) and a body (5), said gripping means (16, 112, 114, 120) further comprising an actuating member which is engaged with the pipe fitting (4) and is movable with respect thereto, wherein said actuating member contacts with the non-unitary assembly comprising the gripping member (1) for contact with a pipeline (10) face and the body (5) in which guide means (2) for the gripping member (1) are formed, to move the gripping member (1) into contact with the pipeline face and relative movement between the gripping member (1) and body (5) via the guide means (2) is possible, at least within a predefined range, after installation of the pipe fitting (4), wherein said gripping member (1) includes a pin (24) and said guide means (2) include a slot (22), the length of which defining a predetermined distance of linear movement of the gripping member (1) with respect to the body (5) in at least one direction, said guide means (2) further including portions (29, 31) which receive rails (25, 27) provided on the gripping member (1), and **characterized in that** the gripping member (1) is also movable with respect to the guide means (2) in an angular manner by providing a level of tolerance between the dimensions of the sizes of the guide means slot (22) and portions (29, 31) and the pin (24) and rails (25, 27) respectively.

2. A pipe fitting (4), said pipe fitting (4) having, at at least one end, means for receipt of an end of a pipeline (10) therein, said pipe fitting (4) including gripping means (16, 112, 114, 120) according to claim 1

3. A pipe fitting (4) according to claim 2
wherein the gripping member (1) is wedge shaped.

4. A pipe fitting (4) according to claim 2 wherein at least one of the gripping means (16, 112, 114, 120) is oriented in a reverse manner to the other gripping means (16, 112, 114, 120) such that the gripping member (1) and guide means (2) of the said at least one gripping means (16, 112, 114, 120) act with respect to movement of the pipeline (10) in an opposing direction to the direction of movement addressed by the other gripping means (16, 112, 114, 120).

5. A pipe fitting (4) according to claim 2 wherein the said gripping member (1) is moveable with respect to the guide means (2) towards and away from the pipeline (10) located therewith, the range of said movement being limited by the guide means (2).

6. A pipe fitting (4) according to claim 2 wherein gripping means (16, 112, 114, 120) are spaced around the periphery of a cavity (8) which is provided to receive the pipeline (10) therein.

7. A pipe fitting (4) according to claim 6 wherein the position of each of the gripping members (1) with regard to the fitting (4) is independently adjustable by using actuation means for each of the respective gripping members (1).

8. A pipe fitting (4) according to claim 2 wherein the pipe fitting (4) includes at a first end a cavity (8) for receipt of a first pipeline (10) end and at the opposing end, a cavity (8) for the receipt of a second pipeline end and first and second sets of gripping means (16,112,114,120) are provided to be selectively movable into the cavity (8) to contact with the first and second pipeline ends respectively.

9. A pipe fitting (4) according to claim 2 wherein the pipe fitting (4) includes, at a first end, a cavity (8) for receipt of a pipeline end and, at the opposing end, means for engagement with a pipeline component and one or more gripping means (16, 112, 114, 120) are located at or adjacent to the first end of the pipe fitting (4) to be selectively movable into the cavity (8) to contact with the said pipeline end.

10. A pipe fitting (4) according to claim 2 wherein the pipe fitting (4) includes sealing means to provide a substantially fluid tight seal between the pipe fitting (4) and the pipeline (10) or pipelines engaged therewith.

11. A pipeline (10) formed from at least two pipeline portions joined together using a pipe fitting (4) as defined in claim 2.

12. A method of joining an end of a pipeline (10) to another end of a pipeline (10) or a pipeline component using a pipe fitting (4), said method comprising the steps of positioning the pipeline end into a cavity (8) in the pipe fitting (4) such that a portion of the pipeline (10) extending from the said pipeline end is located within the cavity (8), providing means in the cavity (8) to provide a fluid seal between the pipeline (10) and the pipe fitting (4), providing at least one gripping means (16, 112, 114, 120) in the pipe fitting (4) and moving, if required, via actuation means provided as part of the gripping means (16, 112, 114, 120), a gripping member (1) of the gripping means (16) relative to a body (5) of the gripping means (16, 112, 114, 120) and into contact with an external face of the said portion of the pipeline (10), wherein said gripping member (1) is including a pin (24) and wherein the gripping member (1) is located and movable with respect to guide means (2) formed in the body (5) with a slot (22), the length of which defining a predetermined distance of linear movement of the gripping member (1) with respect to the body (5) in at least one direction and portions (29, 31) which receive rails (25, 27) provided on the gripping member (1), **characterized in that** the gripping member (1) is movable with respect to the guide means (2) in an angular manner by providing a level of tolerance between the dimensions of the sizes of the guide means slot (22) and portions (29, 31) and the pin (24) and rails (25, 27) respectively, to thereby allow relative movement between the pipeline (10) and the pipe fitting (4) within a predefined range to be accommodated after installation whilst maintaining the integrity of the join between the pipe fitting (4) and said pipeline (10).

13. A method according to claim 12 wherein the same steps are repeated to locate a second pipeline (10) in a second cavity (8) of the pipeline fitting (4) along a common longitudinal axis.

## Patentansprüche

1. Klemmmittel (16, 112, 114, 120) zur Verwendung mit einem Rohrformstück (4), wobei das genannte Klemmmittel (16, 112, 114, 120) eine nicht einstückige Anordnung umfasst, die ein Klemmelement (1) und einen Körper (5) umfasst, wobei das genannte Klemmmittel (16, 112, 114, 120) ferner ein Betätigungselement umfasst, das mit dem Rohrformstück (4) in Eingriff ist und in Bezug darauf bewegbar ist, wobei das genannte Betätigungselement mit der nicht einstückigen Anordnung in Kontakt ist, die das Klemmelement (1) für Kontakt mit einer Rohrleitungs- (10) -Fläche und den Körper (5), in dem ein Führungsmittel (2) für das Klemmelement (1) ausgebildet ist, umfasst, um das Klemmelement (1) mit der Rohrleitungsfläche in Kontakt zu bewegen, und nach der Montage des Rohrformstücks (4) relative Bewegung zwischen dem Klemmelement (1) und dem Körper (5) über das Führungsmittel (2) möglich ist, zumindest innerhalb eines vordefinierten Bereichs, wobei das genannte Klemmelement (1) einen Zapfen (24) aufweist und das genannte Führungsmittel (2) eine Aussparung (22) aufweist, deren Länge einen vorbestimmten Weg linearer Bewegung des Klemmelements (1) in Bezug auf den Körper (5) in wenigstens einer Richtung definiert, wobei das genannte Führungsmittel (2) ferner Teile (29, 31) aufweist, die Schienen (25, 27) aufnehmen, die am Klemmelement (1) bereitgestellt sind, und
**dadurch gekennzeichnet, dass** das Klemmelement (1) auch in Bezug auf das Führungsmittel (2) winklig bewegbar ist, indem es einen Grad an Toleranz zwischen den Abmessungen der Größen der Führungsmittelaussparung (22) und -teilen (29, 31) und dem Zapfen (24) bzw. den Schienen (25, 27) bereitstellt.

2. Rohrformstück (4), wobei das genannte Rohrformstück (4) an wenigstens einem Ende ein Mittel zur Aufnahme eines Endes einer Rohrleitung (10) darin hat, wobei das genannte Rohrformstück (4) Klemmmittel (16, 112, 114, 120) nach Anspruch 1 aufweist.

3. Rohrformstück (4) nach Anspruch 2, wobei das Klemmelement (1) keilförmig ist.

4. Rohrformstück (4) nach Anspruch 2, wobei wenigstens eines der Klemmmittel (16, 112, 114, 120) umgekehrt zu den anderen Klemmmitteln (16, 112, 114, 120) ausgerichtet ist, so dass das Klemmelement (1) und das Führungsmittel (2) des genannten wenigstens einen Klemmmittels (16, 112, 114, 120) in Bezug auf die Bewegung der Rohrleitung (10) in einer entgegengesetzten Richtung zur Bewegungsrichtung wirken, die von den anderen Klemmmitteln (16, 112, 114, 120) angesprochen wird.

5. Rohrformstück (4) nach Anspruch 2, wobei das genannte Klemmelement (1) in Bezug auf das Führungsmittel (2) hin zu und weg von der damit positionierten Rohrleitung (10) bewegbar ist, wobei der Bereich der genannten Bewegung von dem Führungsmittel (2) begrenzt wird.

6. Rohrformstück (4) nach Anspruch 2, wobei Klemmmittel (16, 112, 114, 120) um den Umfang eines Hohlraums (8) herum beabstandet angeordnet sind, der zum Aufnehmen der Rohrleitung (10) darin bereitgestellt ist.

7. Rohrformstück (4) nach Anspruch 6, wobei die Position jedes der Klemmelemente (1) unter Verwendung von Betätigungsmitteln für jedes der jeweiligen Klemmelemente (1) in Bezug auf das Rohrformstück (4) unabhängig einstellbar ist.

8. Rohrformstück (4) nach Anspruch 2, wobei das Rohrformstück (4) an einem ersten Ende einen Hohlraum (8) zur Aufnahme eines ersten Rohrleitungs- (10) -endes und am entgegengesetzten Ende einen Hohlraum (8) zur Aufnahme eines zweiten Rohrleitungsendes aufweist und ein erster und eine zweiter Satz Klemmmittel (16, 112, 114, 120) bereitgestellt ist, um wahlweise in den Hohlraum (8) bewegbar zu sein, um mit dem ersten bzw. dem zweiten Rohrleitungsende in Kontakt zu kommen.

9. Rohrformstück (4) nach Anspruch 2, wobei das Rohrformstück (4) an einem ersten Ende einen Hohlraum (8) zur Aufnahme eines Rohrleitungsendes und am entgegengesetzten Ende ein Mittel für Eingriff mit einer Rohrleitungskomponente aufweist und ein oder mehr Klemmmittel (16, 112, 114, 120) an oder neben dem ersten Ende des Rohrformstücks (4) liegen, um wahlweise in den Hohlraum (8) bewegbar zu sein, um mit dem genannten Rohrleitungsende in Kontakt zu kommen.

10. Rohrformstück (4) nach Anspruch 2, wobei das Rohrformstück (4) ein Dichtungsmittel aufweist, um eine im Wesentlichen fluiddichte Abdichtung zwischen dem Rohrformstück (4) und der bzw. den damit in Eingriff befindlichen Rohrleitung (10) oder Rohrleitungen bereitzustellen.

11. Rohrleitung (10), die von wenigstens zwei Rohrleitungsteilen gebildet wird, die unter Verwendung eines Rohrformstücks (4) nach Anspruch 2 zusammengefügt sind.

12. Verfahren zum Zusammenfügen eines Endes einer Rohrleitung (10) mit einem anderen Ende einer Rohrleitung (10) oder einer Rohrleitungskomponente unter Verwendung eines Rohrformstücks (4), wobei das genannte Verfahren die folgenden Schritte umfasst: Positionieren des Rohrleitungsendes in einen Hohlraum (8) im Rohrformstück (4), so dass ein Teil der Rohrleitung (10), der sich von dem genannten Rohrleitungsende erstreckt, in dem Hohlraum (8) liegt, Bereitstellen eines Mittels in dem Hohlraum (8) zum Bereitstellen einer Fluiddichtung zwischen der Rohrleitung (10) und dem Rohrformstück (4), Bereitstellen von wenigstens einem Klemmmittel (16, 112, 114, 120) in dem Rohrformstück (4) und Bewegen, falls erforderlich, über Betätigungsmittel, die als Teil des Klemmmittels (16, 112, 114, 120) bereitgestellt sind, eines Klemmelements (1) des Klemmmittels (16) relativ zu einem Körper (5) des Klemmmittels (16, 112, 114, 120) und mit einer Außenfläche des genannten Teils der Rohrleitung (10) in Kontakt, wobei das genannte Klemmelement (1) einen Zapfen (24) aufweist und wobei das Klemmelement (1) in Bezug auf ein Führungsmittel (2), das im Körper (5) ausgebildet ist, mit einer Aussparung (22), deren Länge einen vorbestimmten Weg linearer Bewegung des Klemmelements (1) in Bezug auf den Körper (5) in wenigstens einer Richtung definiert, und Teilen (29, 31), die Schienen (25, 27) aufnehmen, die am Klemmelement (1), die Schienen (25, 27) aufnehmen, die am Klemmelement (1) bereitgestellt sind, positioniert und bewegbar ist,
**dadurch gekennzeichnet, dass** das Klemmelement (1) in Bezug auf das Führungsmittel (2) winklig bewegbar ist, indem es einen Grad an Toleranz zwischen den Abmessungen der Größen der Führungsmittelaussparung (22) und -teilen (29, 31) und dem Zapfen (24) bzw. den Schienen (25, 27) bereitstellt, um dadurch das Ermöglichen einer relativen Bewegung zwischen der Rohrleitung (10) und dem Rohrformstück (4) innerhalb eines vordefinierten Bereich zuzulassen, während die Unversehrtheit der Verbindung zwischen dem Rohrformstück (4) und der genannten Rohrleitung (10) aufrechterhalten wird.

13. Verfahren nach Anspruch 12, wobei die gleichen Schritte wiederholt werden, um eine zweite Rohrleitung (10) in einem zweiten Hohlraum (8) des Rohrleitungsformstücks (4) entlang einer gemeinsamen Längsachse zu positionieren.

## Revendications

1. Moyens de préhension (16, 112, 114, 120) pour une utilisation avec un accessoire de conduite (4), lesdits moyens de préhension (16, 112, 114, 120) comprenant un assemblage non unitaire qui comprend un élément de préhension (1) et un corps (5), lesdits moyens de préhension (16, 112, 114, 120) comprenant en outre un élément d'actionnement qui est solidarisé avec l'accessoire de conduite (4) et est mobile par rapport à celui-ci, ledit élément d'actionnement se mettant au contact de l'assemblage non unitaire comprenant l'élément de préhension (1) pour un contact avec une face du pipeline (10) et le corps (5) dans lequel sont formés des moyens de guidage (2) pour l'élément de préhension (1), afin de déplacer l'élément de préhension (1) au contact de la face du pipeline et un mouvement relatif entre l'élément de préhension (1) et le corps (5) via les moyens de guidage (2) étant possible, au moins au sein d'une gamme prédéfinie, après l'installation de l'accessoire de conduite (4), dans lequel ledit élément de préhension (1) inclut une broche (24) et lesdits moyens de guidage (2) incluent une fente (22), dont la longueur définit une distance prédéterminée de mouvement linéaire de l'élément de préhension (1) par rapport au corps (5) dans au moins un sens, lesdits moyens de guidage (2) incluant en outre des portions (29, 31) qui reçoivent des rails (25, 27) prévus sur l'élément de préhension (1), et **caractérisé en ce que** l'élément de préhension (1) est également mobile par rapport aux moyens de guidage (2) suivant une manière angulaire grâce au fait de prévoir un niveau de tolérance entre les dimensions des tailles de la fente des moyens de guidage (22) et les portions (29, 31) et la broche (24) et les rails (25, 27) respectivement.

2. Accessoire de conduite (4), ledit accessoire de conduite (4) possédant, au niveau d'au moins une extrémité, des moyens pour la réception d'une extrémité d'un pipeline (10) dans ceux-ci, ledit accessoire de conduite (4) incluant des moyens de préhension (16, 112, 114, 120) selon la revendication 1.

3. Accessoire de conduite (4) selon la revendication 2, dans lequel l'élément de préhension (1) a la forme d'une cale.

4. Accessoire de conduite (4) selon la revendication 2, dans lequel au moins un des moyens de préhension (16, 112, 114, 120) est orienté suivant une manière inverse par rapport à l'autre moyen de préhension (16, 112, 114, 120), de telle sorte que l'élément de préhension (1) et les moyens de guidage (2) dudit au moins un moyen de préhension (16, 112, 114, 120) agisse par rapport au mouvement du pipeline (10) suivant un sens qui est opposé au sens de mouvement rencontré par l'autre moyen de préhension (16, 112, 114, 120).

5. Accessoire de conduite (4) selon la revendication 2, dans lequel ledit élément de préhension (1) est mobile par rapport aux moyens de guidage (2) vers et à partir du pipeline (10) localisé avec ceux-ci, la gamme dudit mouvement étant limitée par les moyens de guidage (2).

6. Accessoire de conduite (4) selon la revendication 2, dans lequel des moyens de préhension (16, 112, 114, 120) sont espacés autour de la périphérie d'une cavité (8) qui est prévue pour recevoir le pipeline (10) dans celle-ci.

7. Accessoire de conduite (4) selon la revendication 6, dans lequel la position de chacun des éléments de préhension (1) relativement à l'accessoire (4) est ajustable indépendamment grâce à l'utilisation de moyens d'actionnement pour chacun des éléments de préhension (1) respectifs.

8. Accessoire de conduite (4) selon la revendication 2, l'accessoire de conduite (4) incluant, au niveau d'une première extrémité, une cavité (8) pour la réception d'une première extrémité de pipeline (10) et, au niveau de l'extrémité opposée, une cavité (8) pour la réception d'une deuxième extrémité de pipeline et des premier et deuxième ensembles de moyens de préhension (16, 112, 114, 120) étant prévus pour être mobiles sélectivement dans la cavité (8) afin de se mettre au contact des première et deuxième extrémités de pipeline respectivement.

9. Accessoire de conduite (4) selon la revendication 2, l'accessoire de conduite (4) incluant, au niveau d'une première extrémité, une cavité (8) pour la réception d'une extrémité de pipeline et, au niveau de l'extrémité opposée, des moyens pour une solidarisation avec un composant de pipeline et un ou plusieurs moyens de préhension (16, 112, 114, 120) étant localisés ou adjacents à la première extrémité de l'accessoire de conduite (4) pour être mobiles sélectivement dans la cavité (8) afin de se mettre au contact de ladite extrémité de pipeline.

10. Accessoire de conduite (4) selon la revendication 2, l'accessoire de conduite (4) incluant des moyens d'étanchéisation pour procurer un joint substantiellement étanche aux fluides entre l'accessoire de conduite (4) et le pipeline (10) ou des pipelines solidarisés avec celui-ci.

11. Pipeline (10) formé à partir d'au moins deux portions de pipeline j ointes ensemble grâce à l'utilisation d'un accessoire de conduite (4) tel que défini dans la revendication 2.

12. Procédé de jonction d'une extrémité d'un pipeline (10) à une autre extrémité d'un pipeline (10) ou un composant de pipeline grâce à l'utilisation d'un accessoire de conduite (4), ledit procédé comprenant les étapes de positionnement de l'extrémité du pipeline dans une cavité (8) dans l'accessoire de conduite (4) de telle sorte qu'une portion du pipeline (10) s'étendant à partir de ladite extrémité de pipeline soit localisée au sein de la cavité (8), de mise à disposition de moyens dans la cavité (8) afin de procurer un joint pour fluides entre le pipeline (10) et l'accessoire de conduite (4), de mise à disposition d'au moins un élément de préhension (16, 112, 114, 120) dans l'accessoire de conduite (4) et le déplacement, si nécessaire, via des moyens d'actionnement prévus en tant que partie des moyens de préhension (16, 112, 114, 120), un élément de préhension (1) des moyens de préhension (16) par rapport à un corps (5) des moyens de préhension (16, 112, 114, 120) et en contact avec une face externe de ladite portion du pipeline (10), dans lequel ledit élément de préhension (1) inclut une broche (24) et dans lequel l'élément de préhension (1) est localisé et est mobile par rapport à des moyens de guidage (2) formés dans le corps (5) avec une fente (22), dont la longueur définit une distance prédéterminée de mouvement linéaire de l'élément de préhension (1) par rapport au corps (5) dans au moins un sens et les portions (29, 31) qui reçoivent les rails (25, 27) prévus sur l'élément de préhension (1), **caractérisé en ce que** l'élément de préhension (1) est mobile par rapport aux moyens de guidage (2) suivant une manière angulaire grâce au fait de prévoir un niveau de tolérance entre les dimensions des tailles de la fente des moyens de guidage (22) et les portions (29, 31) et la broche (24) et les rails (25, 27) respectivement, pour permettre ainsi un mouvement relatif entre le pipeline (10) et l'accessoire de conduite (4) au sein d'une gamme prédéfinie devant être prise en compte après l'installation tout en maintenant l'intégrité de la jonction entre l'accessoire de conduite (4) et ledit pipeline (10).

13. Procédé selon la revendication 12, dans lequel les mêmes étapes sont répétées afin de localiser un deuxième pipeline (10) dans une deuxième cavité (8) de l'accessoire de pipeline (4) le long d'un axe longitudinal commun.
